Europäisches Patentamt

European Patent Office

Office européen des brevets

(19)

(11) Veröffentlichungsnummer: **0 216 225**
**B1**

(12)

# EUROPÄISCHE PATENTSCHRIFT

(45) Veröffentlichungstag der Patentschrift:
**06.06.90**

(21) Anmeldenummer: **86112276.0**

(22) Anmeldetag: **05.09.86**

(51) Int. Cl.⁵: **B23D 25/04**

(54) Verfahren und Vorrichtung zum Abtrennen von Profilwerkstoff.

(30) Priorität: **25.09.85 DE 3534127**

(43) Veröffentlichungstag der Anmeldung:
**01.04.87 Patentblatt 87/14**

(45) Bekanntmachung des Hinweises auf die Patenterteilung:
**06.06.90 Patentblatt 90/23**

(84) Benannte Vertragsstaaten:
**AT BE CH DE FR GB IT LI LU NL SE**

(56) Entgegenhaltungen:
**DE-A- 2 225 300**
**DE-A- 2 341 906**
**DE-A- 2 452 041**
**DE-A- 2 635 865**
**DE-C- 884 445**
**FR-A- 2 336 207**
**US-A- 2 648 383**

(73) Patentinhaber: **MECAPEC S.A., Oberseestrasse,**
**CH-8716 Schmerikon/SG(CH)**

(72) Erfinder: **Rimmele, Karl, Rosengarten 621,**
**CH-8716 Schmerikon(CH)**

(74) · Vertreter: **Vièl, Georg, Dipl.-Ing., Am Zimmerplatz 16,**
**D-6606 Saarbrücken-Gersweiler(DE)**

ACTORUM AG

**Beschreibung**

Die Erfindung betrifft ein Verfahren zum Abtrennen von sich bewegendem Profilwerkstoff bei erhöhter Temperatur unter Verwendung einer während des Abtrennens mit dem Profilwerkstoff gekoppelten, mitlaufenden Schneideinrichtung. Gegenstand der Erfindung ist auch eine Vorrichtung zum Durchführen des neuen Verfahrens.

Zum Abtrennen von Profilstücken von sich bewegendem Gut bei hohen Temperaturen, so beispielsweise von Knüppeln in Stranggießanlagen für metallische Werkstoffe, werden vorwiegend Brennschneidanlagen verwendet. Durch Brennschneiden entsteht Materialverlust. Außerdem ist der Betrieb und die Unterhaltung solcher Anlagen wegen der verwendeten Gase (Sauerstoff) und der Verunreinigung des Umfeldes umständlich und aufwendig.

Es sind zum Abtrennen von Knüppeln in Stranggießanlagen auch Scheren herkömmlicher Bauart bekannt. Sie gewährleisten keinen sauberen Schnitt (Grat), haben einen großen Mitlaufweg und die Instandhaltung ist mit nicht unerheblichem Aufwand verbunden.

Aus der DE-A 2 635 865 ist eine fliegende Schervorrichtung bekannt, die eine besondere Vorrichtung zum Halten des Scherwagens in Betriebsrelation zu den Scher- bzw. Druckplatten darstellt.

In der Druckschrift DE-C 884 445 ist ein Verfahren zum Abscheren von Profilstäben angegeben, wobei das Schergut zuerst von mindestens zwei Seiten her angeschert und erst nachher vollständig abgeschert wird. Dieses Verfahren und die dazugehörige Vorrichtung sind nur bei Raumtemperatur verwendbar.

Der Erfindung liegt die Aufgabe zugrunde, ein Verfahren der eingangs genannten Art zu schaffen, mit dem Profilwerkstoff bei hohen Temperaturen mit einem baulich kleinen Aggregat abgetrennt werden kann.

Diese Aufgabe wird erfindungsgemäß dadurch gelöst, daß mit Hilfe eines ersten Messers eine Seite des Profilwerkstoffes mit einer Kerbe versehen und dann durch Kerben mit einem zweiten, in der gleichen Ebene von der gegenüberliegenden Seite wirksamen Messer ein Stück von dem Profilwerkstoff abgetrennt wird.

Nach der Erfindung kann die erste Kerbe entweder von der Ober- oder der Unterseite des Profilwerkstoffes her eingebracht werden.

Eine zweckmäßige Vorrichtung zum Durchführen des Verfahrens ist so ausgebildet, daß die Schneideinrichtung horizontal verfahrbar zwischen zwei Rollen angeordnet ist und einen Messerhalter mit einer Abdeckung aufweist, daß ein vertikal beweglicher Schuh und ein diesem zugeordnetes Gegenstück vorgesehen sind, und daß der Messerhalter mit den beiden Messern über ein Gelenkauge mit einem Antrieb verbunden ist.

Die bei der Schneideinrichtung verwendeten Messer können erfindungsgemäß eine konkav ausgebildete Schneide mit stumpfer Schnittfläche haben und können im eigentlichen beim Kerben zum Einsatz kommenden Abschnitt sowie über eine bestimmte Höhe keilförmig ausgebildet sein.

Die äußere Begrenzung der Messer kann je nach der Form des Ausgangsmaterials kreisbogenförmig oder viereckig sein.

Auch können die Messer zwecks Fixierung in dem Messerhalter eine Bohrung aufweisen.

Die mit der Erfindung erzielten Vorteile bestehen insbesondere darin, daß infolge der neuen Abtrenntechnik eine schmale, in relativ leichter Bauweise herzustellende Schneideinrichtung realisierbar ist, was vor allem bei Mehrstranganlagen von Bedeutung ist. Dazu kommt ein nahezu gratfreier Schnitt. Die Einfachheit der erfindungsgemäßen Schneideinrichtung bringt darüber hinaus eine geringe Störanfälligkeit und eine einfache Instandhaltung mit sich.

Die Erfindung wird anhand der Zeichnungen näher erläutert.

Es zeigen

Fig. I die Ansicht und
Fig. 2 die Seitenansicht einer Schneideinrichtung zum Durchführen des neuen Verfahrens,
Fig. 3 eines der verwendeten Messer für die Schneideinrichtung,
Fig. 4 den Schnitt IV - IV von Fig. 3 und
Fig. 5 die Ansicht V von Fig. 3.

In Fig. I und 2 ist mit I der sich in Richtung des Pfeiles 2 bewegende Profilwerkstoff bezeichnet, beispielsweise ein durch Stranggießen hergestellter Stahlstrang, der auf Rollen 3 transportiert wird.

Das wesentliche Element der Schneideinrichtung 4 ist ein Messerhalter 5, in dem oben und unten je ein Messer 6, 7 leicht auswechselbar eingesetzt ist, wozu eine Abdeckung 8 dient, die beispielsweise mit vier Keilverschlüssen 9 an dem Messerhalter 5 befestigt ist. Die Messer 6 und 7 sind in der gleichen Ebene angeordnet, im Gegensatz zu Scheren bekannter Art, bei denen sich zwei Schneiden aneinander vorbeibewegen.

Über ein Gelenkauge IO ist der Messerhalter 5 mit einem Antrieb II verbunden, vorzugsweise ein hydraulisch oder pneumatisch betätigter Gleichlaufzylinder. Mit I2 sind Düsen für die Zufuhr von Kühlmittel (Luft) bezeichnet.

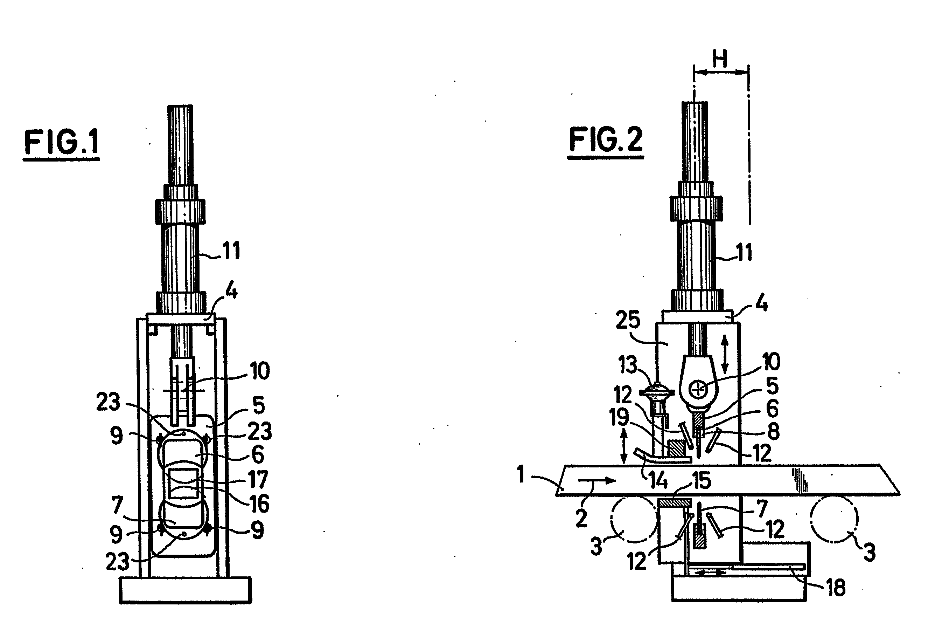

Soll ein Stück von dem Profilwerkstoff I abgetrennt werden, so wird die Schneideinrichtung 4 mit Hilfe des vertikal durch einen Preßluftantrieb I3 beweglichen Schuhs I4 und des Gegenstücks I5 an den sich bewegenden Profilstrang I gekoppelt: die Schneideinrichtung 4 bewegt sich ab diesem Zeitpunkt mit der Transportgeschwindigkeit des Profilstranges I - angeklemmt - ebenfalls in Richtung des Pfeiles 2. Nun wird der Antrieb II betätigt und beispielsweise das obere Messer 6 dringt in den Profilstrang I bis zur Position I6 (Fig. I) ein. Unmittelbar danach wird der Antrieb II so betätigt, daß das untere Messer 7 in der selben Ebene wie vorher das Messer 6 (von unten her) in den Profilwerkstoff eindringt, bis zur Position I7 (Fig. I). Der in Fig. 2 rechts von der Schnittstelle liegende Teil des Profilwerkstoffs I ist damit von dem Strang abgetrennt. Sofort danach wird die Schneideinrichtung 4 durch Betätigen des Preßluftantriebs I3 abgekoppelt und z.B. durch Gasdruckfedern I8 wieder in die Ausgangslage befördert.

Ist der Profilwerkstoff I stranggegossener Stahl, so beträgt seine Temperatur beim Abtrennen ca. 700 bis l.l5O°C, je nach Stahlqualität und Aufstellort der Schneideinrichtung. Bei diesen Temperaturen erfolgt das Abtrennen eines Knüppels mit beispielsweise einem Querschnitt von l8O mm² bei Anwendung des erfindungsgemäßen Verfahrens innerhalb von 4,5 Sekunden. Dadurch ist die erforderliche Mitlaufzeit der Schneideinrichtung 4 und damit der Hub H verhältnismäßig klein. Das bedeutet, der Platzbedarf innerhalb einer Stranggießanlage für das Aggregat zum Abtrennen der Knüppel ist nicht groß.

Welches der beiden Messer 6, 7 zuerst den Profilwerkstoff 1 mit einer Kerbe versieht, ist für das Verfahren nach der Erfindung grundsätzlich ohne Bedeutung; der Ablauf kann auch so sein, daß zuerst das untere Messer 7 bis zur Position 17 (Fig. 1) und danach das obere Messer 6 bis zur Position 16 mit Hilfe des Antriebs 11 bewegt wird.

Beim Betätigen des oberen Messers 6 ist der Profilwerkstoff 1 durch die Rollen 3 und das Gegenstück 15 gut geführt und abgestützt. Damit auch in umgekehrter Richtung, bei Betätigung des Messers 7, ein ausreichendes Widerlager für den Profilwerkstoff 1 vorhanden ist, wird zweckmäßigerweise der Schuh 14 ausreichend stark ausgebildet – verstärkt mit einer Traverse 19 –, so daß er als Niederhalter wirkt.

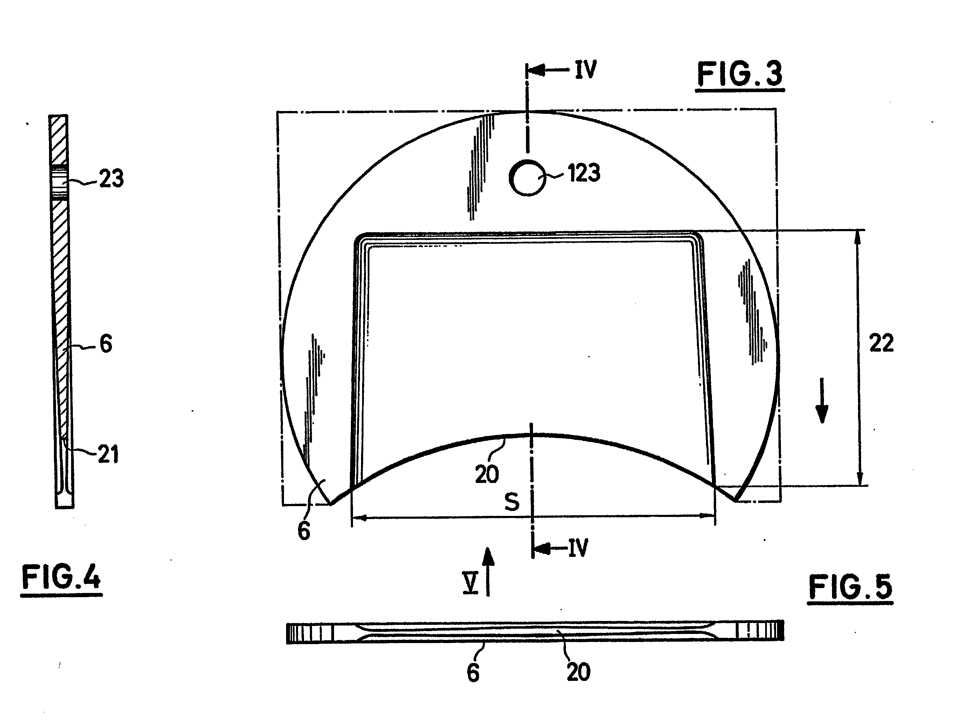

Wesentlich für die Vorrichtung zum Durchführen des Verfahrens nach der Erfindung ist die Ausbildung der beiden Messer 6, 7. In Fig. 3, 4 und 5 ist ein Ausführungsbeispiel des Messers 6 dargestellt. Ein Merkmal des Messers 6 (oder 7) in Fig. 3 besteht in der konkaven Ausbildung der Schneide 20. Im Gegensatz zu üblichen keilförmigen Schneiden ist die Schneide 20, wie aus Fig. 4 zu erkennen ist, am äußersten Ende 21, an der Schnittfläche, stumpf ausgebildet. Um ein stabiles Messer 6 zu erhalten, ist dieses nur im Bereich des eigentlichen beim Kerben zum Einsatz kommenden Abschnitts S und nur über eine bestimmte Höhe 22 keilförmig ausgebildet (Fig. 4 und 5). Im oberen Teil des Messers 6 bzw. 7 kann eine Bohrung 23 vorgesehen sein, um das Messer z.B. mit Hilfe eines Bolzens l23 im Messerhalter 5 zu fixieren. Die äußere Form des Messers wird so gewählt, daß man beim Herstellen des Messers ohne große Bearbeitung auskommt; ist das Ausgangsmaterial rund (gewalztes Material), so kann auch die äußere Form des Messers rund sein (ausgezogene Linien in Fig. 3). Ist das Ausgangsmaterial z.B ein Vierkant, so verlaufen die Umrisse des Messers entsprechend den strichpunktierten Linien in Fig. 3.

Die konkave Ausbildung der Schneide 2O (Fig. 3) hat im wesentlichen zwei Vorteile: Einmal erfolgt dadurch ein sanftes Kerben des Profilwerkstoffes I, weil die Schneide 2O Zug um Zug wirksam wird und nicht die gesamte Schnittfläche 2l gleichzeitig auf den Profilwerkstoff I gedrückt wird. Zum anderen ergibt sich durch das Zusammenwirken von keilförmiger Ausbildung im Bereich S und 22 sowie konkaver Ausbildung der Schneide 2O, daß die Schneide 2O nach außen hin dünner als in der Mitte ist (Fig.

5), was eine wichtige Voraussetzung für das Unterdrücken des Seitengrates ist.

Die Messer 6, 7 können aus Warmarbeitsstahl bestehen, der zur Verschleißminderung ggf. beschichtet ist. Es ist auch denkbar, die Messer aus Hartmetall herzustellen oder aus einer Kombination Hartmetall/Warmarbeitsstahl.

## Patentansprüche

1. Verfahren zum Abtrennen von sich bewegendem Profilwerkstoff bei erhöhter Temperatur unter Verwendung einer während des Abtrennens mit dem Profilwerkstoff gekoppelten, mitlaufenden Schneideinrichtung (4), dadurch gekennzeichnet, daß mit Hilfe eines ersten Messers (6) eine Seite des Profilwerkstoffes mit einer Kerbe versehen und danach durch Kerben mit einem zweiten, in der gleichen Ebene von der gegenüberliegenden Seite wirksamen Messer (7) ein Stück von dem Profilwerkstoff abgetrennt wird.

2. Verfahren nach Anspruch 1, dadurch gekennzeichnet, daß die erste Kerbe von der Oberseite des Profilwerkstoffes her eingebracht wird.

3. Verfahren nach Anspruch 1, dadurch gekennzeichnet, daß die erste Kerbe von der Unterseite des Profilwerkstoffes her eingebracht wird.

4. Vorrichtung zum Durchführen des Verfahrens nach Anspruch 1, 2 oder 3, dadurch gekennzeichnet, daß die Schneideinrichtung (4) horizontal verfahrbar zwischen zwei Rollen (3) angeordnet ist und einen Messerhalter (5) mit einer Abdeckung (8) aufweist, daß ein vertikal beweglicher Schuh (14) und ein diesem zugeordnetes Gegenstück (15) vorgesehen sind, und daß der Messerhalter (5) mit den beiden Messern (6, 7) über ein Gelenkauge (10) mit einem Antrieb (11) verbunden ist.

5. Vorrichtung nach Anspruch 4, dadurch gekennzeichnet, daß die Messer (6, 7) eine konkav ausgebildete Schneide (2O) mit stumpfer Schnittfläche (2l) aufweisen sowie im eigentlichen beim Kerben zum Einsatz kommenden Abschnitt (S) und über eine bestimmte Höhe (22) keilförmig ausgebildet sind.

6. Vorrichtung nach Anspruch 4 oder 5, dadurch gekennzeichnet, daß die äußere Begrenzung der Messer (6, 7) kreisbogenförmig ist.

7. Vorrichtung nach Anspruch 4 oder 5, dadurch gekennzeichnet, daß die äußere Begrenzung der Messer (6, 7) viereckig ist.

8. Vorrichtung nach einem oder mehreren der Ansprüche 4 bis 7, dadurch gekennzeichnet, daß die Messer (6, 7) eine Bohrung (23) aufweisen.

## Claims

1. Method of shearing moving profiled stock at elevated temperature using a cutting means (4), accompanying the movement and coupled to the profiled stock during shearing, characterized in that, with the aid of a first blade (6), one side of the profiled stock is provided with a notch and then a piece is sheared off the profiled stock by notching with a second blade (7), acting in the same plane from the opposite side.

2. Method according to Claim 1, characterized in that the first notch is made from the upper side of the profiled stock.

3. Method according to Claim 1, characterized in that the first notch is made from the underside of the profiled stock.

4. Device for carrying out the method according to Claim 1, 2 or 3, characterized in that the cutting means (4) are arranged horizontally displaceably between two rollers (3) and have a blade holder (5) with a cover (8), in that a vertically moveable shoe (14) and a counterpiece (15) assigned thereto are provided, and in that the blade holder (5) with the two blades (6, 7) is connected via a shackle toggle joint (10) to a drive (11).

5. Device according to Claim 4, characterized in that the blades (6, 7) have a concavely designed cutting edge (20) with blunt cut face (21) and are designed in the form of a wedge in the actual section (S) employed in notching and over a certain height (22).

6. Device according to Claim 4 or 5, characterized in that the outer limitation of the blades (6, 7) is in the form of a circular arc.

7. Device according to Claim 4 or 5, characterized in that the outer limitation of the blades (6, 7) is rectangular.

8. Device according to one or more of Claims 4 to 7, characterized in that the blades (6, 7) have a bore (23).

**Revendications**

1. Procédé de tronçonnage de matériau profilé en mouvement à une température élevée en utilisant un dispositif de coupe (4), accouplé pendant le tronçonnage au matériau profilé et l'accompagnant, caractérisé en ce qu'il consiste à ménager une entaille sur un côté du matériau profilé à l'aide d'une première lame (6), et ensuite à tronçonner un tronçon du matériau profilé par des entailles ménagées à l'aide d'une seconde lame (7) agissant dans le même plan par le côté opposé.

2. Procédé suivant la revendication 1, caractérisé en ce qu'il consiste à ménager la première entaille du côté supérieur du matériau profilé.

3. Procédé suivant la revendication 1, caractérisé en ce qu'il consiste à ménager la première entaille du côté inférieur du matériau profilé.

4. Dispositif pour la mise en œuvre du procédé suivant la revendication 1, 2 ou 3, caractérisé en ce que le dispositif de coupe (4) est monté mobile horizontalement entre deux rouleaux (3) et comporte un porte-lames (5) ayant une partie qui la recouvre (8), en ce qu'il est prévu un sabot (14) mobile verticalement et une pièce antagoniste (15) associée à celui-ci, et en ce que le porte-lames (5) ayant les deux lames (6, 7) est relié à un dispositif d'entraînement (11), par une chape d'articulation (10).

5. Dispositif suivant la revendication 4, caractérisé en ce que les lames (6, 7) comportent un tranchant (20) concave à surface de coupe (21) tronquée, ainsi qu'une section (S) utilisée vraiment lors de l'entaillage et sont constituées en forme de coin sur une hauteur (22) déterminée.

6. Dispositif suivant la revendication 4 ou 5, caractérisé en ce que la limite extérieure des lames (6, 7) est en forme d'arc de cercle.

7. Dispositif suivant la revendication 4 ou 5, caractérisé en ce que la limite extérieure des lames (6, 7) est rectangulaire.

8. Dispositif suivant l'une ou plusieurs des revendications 4 à 7, caractérisé en ce que les lames (6, 7) comportent un perçage (23).

FIG.2

FIG.1

**FIG.4**

**FIG.3**

**FIG.5**

EP 0 216 225 B1